# EUROPÄISCHE PATENTSCHRIFT

(11) **EP 2 978 087 B1**
(45) Veröffentlichungstag und Bekanntmachung des Hinweises auf die Patenterteilung: **06.09.2017**
(21) Anmeldenummer: 14002545.3
(22) Anmeldetag: 23.07.2014
(51) Int. Cl.: H02G 1/06, H02G 3/04, H02G 1/08

(54) **Bündelungsvorrichtung für Kabel und Verfahren zum Bündeln von Kabeln**
Bundling device for cable and a method for making up bundles of cables
Dispositif de mise en faisceau pour câble et procédé de mise en faisceau de câbles

(43) Veröffentlichungstag der Anmeldung: 27.01.2016
(73) Patentinhaber: Kovacs, Tibor, 84347 Pfarrkirchen (DE)
(72) Erfinder: Kovacs, Tibor, 84347 Pfarrkirchen (DE)
(74) Vertreter: Patentanwälte Hosenthien-Held und Dr. Held

(56) Entgegenhaltungen:
- EP-A2- 0 149 032
- US-A1- 2007 053 646
- US-A1- 2009 277 344
- US-A1- 2010 212 263
- US-B1- 6 267 355

## Beschreibung

Die Erfindung betrifft eine Bündelungsvorrichtung für Kabel mit den Merkmalen des Oberbegriffs des Anspruches 1 und ein Verfahren zum Bündeln von Kabeln. Die zu bündelnden Kabel sind beispielsweise Datenkabel, während der Schlauch ein Schlauch mit Maschen oder ein dünner, elastischer Schlauch sein kann. Durch Benutzung sind Bündelungsvorrichtungen und Verfahren bekannt, bei denen der Schlauch auf das Kabelbündel aufgezogen wird, wobei die Zufuhrrichtungen entgegengesetzt sind. Mit zunehmender Länge des vom Schlauch umschlossenen Kabelbündels nimmt die Reibung zu, so dass in der Praxis eine Obergrenze für derartige schlauchumschlossene Kabelbündel von etwa 30 m besteht. Das Problem wird vermieden bei anderen bekannten Bündelungsvorrichtungen und Verfahren, bei denen der Schlauch zunächst nur aus Fäden besteht, welche auf das Kabelbündel geflochten werden unter Bildung des Schlauches, wie es beispielsweise auch bei geflochtenen Schirmungen praktiziert wird.

Aus der US 2009/0277344 A1 ist eine Bündelungsvorrichtung der eingangs genannten Art bekannt.Auf einem tischförmigen Rohrhalter ist mittels eines Montageswinkels ein Sammelrohr mit seinem festen Ende befestigt, während das die Bündelungsstelle bildende freie Ende zwischen zwei Führungsrollen angeordnet ist. Der Schlauch ist auf das Sammelrohr aufgeschoben. Von mehreren Abrollern werden Kabel zur Sammelöffnung im Montagewinkel des Rohrhalters geführt und direkt durch diese Sammelöffnung in das Sammelrohr hinein geführt. Das vom Schlauch umschlossene Kabelbündel wird nach den zwei Führungsrollen zu einem Aufroller geführt und dort aufgerollt.

Die US 2007/0053646 A1 offenbart ein Kabelbündel, dessen Kabel durch ein Sammelrohr mit Trichter geführt werden. Anschließend wird das Sammelrohr verschoben und dabei ein auf das Sammelrohr aufgeschobener Schlauch auf das Kabelbündel abgegeben.

In der US 2010/0212263 A1 wird eine Bündelungsvorrichtung für Kabel beschrieben, die auf einer Sackkarre montiert ist. Die Bündelungsvorrichtung weist ein erstes Sammelsieb mit eng beieinander liegenden, kleinen Öffnungen als feine Führung für die einzelnen Kabel und - in Zufuhrrichtung davor - einem mit dem ersten Sammelsieb fluchtendes zweites Sammelsieb mit weiter beabstandeten, größeren Öffnungen als grobe Führung für die einzelnen Kabel auf. In Zufuhrrichtung vor dem zweiten Sammelsieb werden die Kabel jeweils aus handelsüblichen Abrollboxen gezogen. In Zufuhrrichtung nach dem ersten Sammelsieb wird das Kabelbündel von einzelnen Kabelbindern umschlossen.

Die US 6,267,355 B1 zeigt eine Vorrichtung, bei welcher mehrere Kabel von Abrollern abgerollt und einzeln durch Öffnungen durch ein Sammelsieb gezogen werden, um anschließend in einem Gebäude verbaut zu werden.

Schließlich ist in der EP 0 149 032 A2 beschrieben, wie zwei Kabel mittels einer Hülse verbunden werden. Dabei wird die Hülse zunächst mittels einer Aufschiebhilfe auf ein Führungsrohr geschoben, bevor dann die beiden in das Führungsrohr eingeführt und die Hülse an die Verbindungsstelle geschoben wird.

Die drei letztgenannten Druckschriften geben keine Hinweise zum Aufbringen eines Schlauches auf ein Kabelbündel.

Der Erfindung liegt daher die Aufgabe zu Grunde, eine Bündelungsvorrichtung und ein Verfahren der eingangs genannten Art zu verbessern. Diese Aufgabe wird erfindungsgemäß gelöst durch eine Bündelungsvorrichtung mit den Merkmalen des Anspruches 1 und ein Verfahren mit den Merkmalen des Anspruches 8. Vorteilhafte Ausgestaltungen sind Gegenstand der Unteransprüche.

Das vorgesehene Sammelrohr ist sowohl als Kabelzufuhr als auch als Schlauchzufuhr ausgebildet. Die relative Reibung von Schlauch und Kabelbündel, wie sie bei dem bekannten (gegenläufigen) Aufziehen des Schlauchs auf das Kabelbündel auftritt, wird vermieden. Vielmehr haben die Kabel und der Schlauch die gleiche Zufuhrrichtung.

Zwischen den Abrollern und dem Sammelrohr sind für die Kabel eine Führungsöffnung als gemeinsame grobe Führung und ein Sammelsieb mit Öffnungen als einzelne feine Führungen vorgesehen.

Gegenüber dem Flechten des Schlauches aus einzelnen Fäden besteht der Vorteil, dass die erfindungsgemäße Bündelungsvorrichtung sehr viel einfacher ausgebildet ist. Die Zugkraft kann manuell aufgebraucht werden, so dass die Bündelungsvorrichtung sehr kostengünstig in der Herstellung ist. Eine gestreckte Ausführung des Sammelrohres ist hinsichtlich der Reibung vorteilhaft gegenüber einer gebogenen Ausführung.

Die zu bündelnden Kabel sind vorzugsweise Datenkabel und können beispielsweise als Twisted-Pair-, Koaxial- oder Glasfaser-Kabel ausgebildet sein. Kombinationen sind möglich.

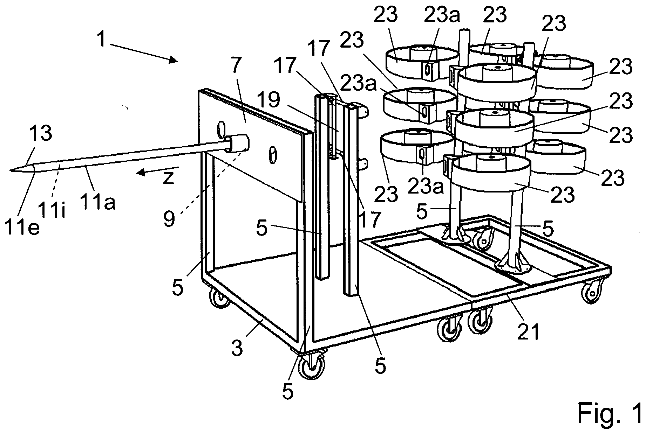

Im Folgenden ist die Erfindung anhand eines in der Zeichnung dargestellten Ausführungsbeispiels näher erläutert. Es zeigen
- Fig. 1: eine perspektivische Ansicht der Bündelungsvorrichtung ohne Kabel und ohne Schlauch,

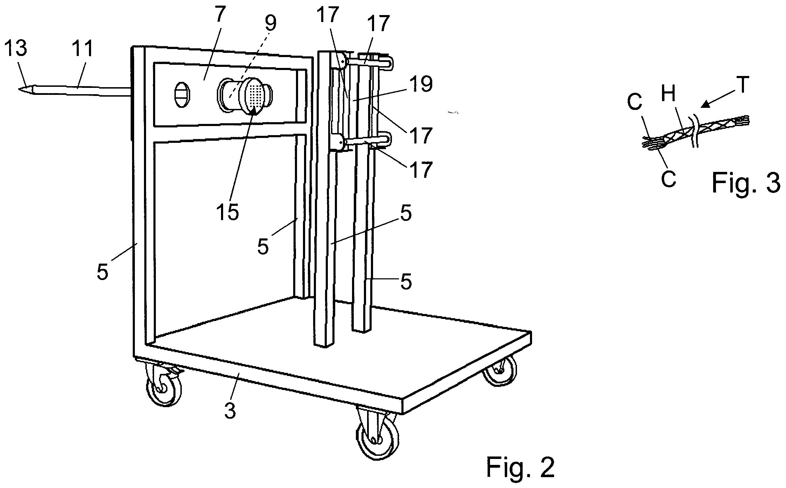

- Fig. 2: eine weitere perspektivische Ansicht des Aufzieherteils der Bündelungsvorrichtung,
- Fig. 3: eine schematische Darstellung eines von einem Schlauch umschlossenen Kabelbündels, und

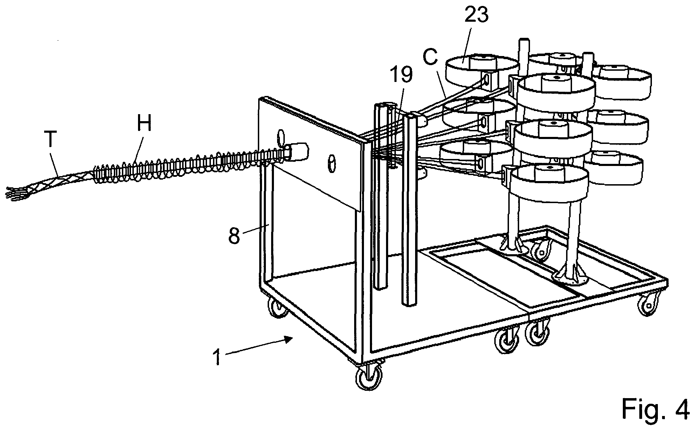

- Fig. 4: eine Fig. 1 entsprechende Ansicht der Bündelungsvorrichtung mit Kabel und Schlauch.

Eine Bündelungsvorrichtung 1 für Kabel C, insbesondere für Datenkabel, weist einen ersten Montagerahmen 3 auf. Der erste Montagerahmen 3 hat beispielsweise einen rechteckigen Grundriss und weist eine Plattform oder eine geeignete Anzahl von Querstreben auf. Außerdem weist der erste Montagerahmen 3 vorliegend vier Transportrollen zum Bewegen auf. Von dem ersten Montagerahmen 3 stehen mehrere, zueinander parallele Träger 5 (senkrecht nach oben) ab. Zwei vorzugsweise am Rand des ersten Montagerahmens 3 angeordnete Träger 5 sind mittels einer Quertraverse 7 verbunden. Die beiden Träger 5 und die Quertraverse 7 bilden einen Rohrhalter 8. Die Quertraverse 7 weist (wenigstens näherungsweise mittig) eine Sammelöffnung 9 auf, die horizontal ausgerichtet ist.

Ein Sammelrohr 11, welches ein festes und ein freies Ende aufweist, ist am Rohrhalter 8, genauer gesagt an der Quertraverse 7, mittels des festen Endes angebracht. Die Anbringung des Sammelrohrs 11 ist vorzugsweise für den Benutzer lösbar, so dass das Sammelrohr 11 gegen ein alternatives Sammelrohr mit anderem Durchmesser und/oder anderer Länge austauschbar ist. Das Sammelrohr 11 steht über den ersten Montagerahmen 3 über. Das hohle, zylindrische Sammelrohr 11 fluchtet mit der Sammelöffnung 9 und ist vorzugsweise horizontal ausgerichtet, steht also von der Quertraverse 7 horizontal ab. Die Ausrichtung des Sammelrohres 11 definiert eine Zufuhrrichtung z. Am freien Ende des Sammelrohres 11 ist ein Auschiebhilfel3 ("Entenschnabel") lösbar anbringbar, vorzugsweise in das hohle Sammelrohr 11 einsteckbar. Die Aufschiebhilfe 13 verjüngt sich (vorzugsweise konisch) von dem Durchmesser des Sammelrohres 11 zu eine kleinen, kugelförmigen Spitze. Auf der vom Sammelrohr 11 abgewandten Seite der Quertraverse 7 ist ein Sammelsieb 15 angebracht, welches mit der Sammelöffnung 9 fluchtet. Das Sammelsieb 15 ist in der Art eines Topfes mit mehreren Öffnungen im Boden ausgebildet. Auch die Anbringung des Sammelsiebs 15 ist vorzugsweise für den Benutzer lösbar, so dass das Sammelsieb 15 gegen ein alternatives Sammelsieb mit Öffnungen von anderem Durchmesser und/oder anderem Querschnitt und/oder andererAnzahl austauschbar ist.

Zwei weitere Träger 5 lagern mehrere, vorliegend vier drehbare Führungsrollen 17, welche zwischen sich eine Führungsöffnung 19 bilden, die mit der Sammelöffnung 9 fluchtet, also in Zufuhrrichtung z ausgerichtet ist. Zwei Führungsrollen 17 sind horizontal, die beiden anderen vertikal angeordnet, so dass sich entsprechend der Anzahl der Führungsrollen 17 die Führungsöffnung 19 in rechteckiger Form ergibt. Mit einer anderen Anzahl von Führungsrollen 17 ergibt sich eine andere Form der Führungsöffnung 19. Die Führungsrollen 17 sind vorzugsweise hohle (oder massive) Rohre (von zylindrischer oder konischer Form), die an ihren Enden in Öffnungen von Lagern an den Trägern 5 greifen. Anstelle der Führungsrollen 19 könnte beispielsweise ein trichterförmiger Block aus einem besonders gleitenden Kunststoff verwenden werden. Ziel ist ein möglichst geringer Reibungswiderstand an der Begrenzung der Führungsöffnung 19. Der erste Montagerahmen 3 und seine Aufbauten bilden das Aufzieherteil der Bündelungsvorrichtung 1.

Die Bündelungsvorrichtung 1 weist vorzugsweise einen zweiten Montagerahmen 21 auf. Die zweite Montagerahmen 21 weist beispielsweise einen rechteckigen Grundriss und vier Transportrollen zum Bewegen auf. Vorzugsweise sind die beiden Montagerahmen 3 und 21 unabhängig voneinander bewegbar, werden aber für den Gebrauch der Bündelungsvorrichtung 1 in Anlage aneinander gebracht ("andocken") und können gegebenenfalls auch verbunden werden. Von dem zweiten Montagerahmen 21 stehen weitere, zueinander parallele Träger 5 (senkrecht nach oben) ab. An den Trägern 5 des zweiten Montagerahmens 21 sind mehrere Abroller 23 montiert, welche zur Aufnahme von aufgewickelten Kabel C oder Trommeln mit aufgewickelten Kabeln C ausgebildet sind. Hierzu weisen die Abroller 23 eine vertikal nach oben offene Topfform mit einem zentralen Kern auf, welcher um eine vertikale Achse drehbar sein kann. Dadurch wird (im Gegensatz zu feststehenden Kabelzuführungen) eine Verwindung der Kabel C beim Abrollen verhindert. In der Wand des Abrollers 23 öffnet sich tangential eine Abrollöffnung 23a. Die Abroller 23 sind so montiert, dass die Abrollöffnung 23a in Zufuhrrichtung z (oder näherungsweise parallel dazu) ausgerichtet ist, wenn die beiden Montagerahmen 3 und 21 sich in Anlage aneinander befinden. Der zweite Montagerahmen 21 und seine Aufbauten bilden das Abrollerteil der Bündelungsvorrichtung 1.

Mit der Bündelungsvorrichtung 1 können mehrere Kabel C zu einem Kabelbündel T zusammengefasst werden, welches von einem Schlauch H, insbesondere einem grobmaschigen Geflechtsschlauch (Netzschlauch) oder einem feinmaschigen Gewebeschlauch, umschlossen wird. Die Bündelungsvorrichtung 1 ist dabei als Aufziehvorrichtung ausgebildet, d.h. der Schlauch H wird mittels Zugkraft auf die gebündelten Kabel C aufgebracht. Das Verfahren hierzu umfasst drei Vorbereitungsschritte, mit denen die Bündelungsvorrichtung 1 vorbereitet (aufgerüstet) wird, und den Verarbeitungsschritt. Die Reihenfolge der drei Vorbereitungsschritte kann variieren, wobei die nachfolgend beschriebene Reihenfolge die bevorzugte ist.

In einem ersten Vorbereitungsschritt wird die Aufschiebhilfe 13 in das Sammelrohr 11 gesteckt, der zu verwendete Schlauch H über die Aufschiebhilfe 13 auf das Sammelrohr 11 aufgeschoben (entgegen der Zufuhrrichtung z) und die Aufschiebhilfe 13 wieder entfernt. Der Schlauch H wirft beim Aufschieben Falten, so dass gegenüber der Länge des Sammelrohres 11 eine mehrfache Menge an Schlauch H aufschiebbar ist und damit gespeichert werden kann. Die Außenseite des Sammelrohrs 11 bildet nun eine Schlauchzufuhr 11a. Die Menge an Schlauch H ist auf die Länge herzustellenden, vom Schlauch H umschlossenen Kabelbündels T abgestimmt, d.h.. der Schlauch H wird vorher in einer passenden Länge abgelängt. Die Länge ergibt sich insbesondere aus den Parametern Bündeldurchmesser, Schlauchdurchmesser, Festigkeit des Schlauchs nach dem Aufziehen. In der Regel ist das Verhältnis Kabel C zu Schlauch H etwa 1,2:1, da der Schlauch H durch die nachfolgend beschriebene Straffung länger wird, wobei eine Toleranz der straffenden Zugkraft sich auf die tatsächlich benötigte Menge an Schlauch H auswirkt.

In einem zweiten Vorbereitungsschritt werden die zu bündelnden Kabel C in die Abroller 23 eingelegt und das jeweils äußere Ende durch die Abrollöffnung 23a gefädelt. In einem dritten Vorbereitungsschritt, für den sich die beiden Montagerahmen 3 und 21 (und damit das Aufzieherteil und das Abrollerteil der Bündelungsvorrichtung 1) in Anlage aneinander befinden, wird von jedem Kabel C das Ende zunächst durch die Führungsöffnung 19 (als "grobe" Führung) und dann jeweils in genau eine Öffnung des Sammelsiebes 15 (als "feine" Führung) gesteckt, das zugeordnete Kabel C in Zufuhrrichtung z weitergeschoben (in der Regel zusammen mit den anderen zu bündelnden Kabeln C) durch die Sammelöffnung 9 und das Sammelrohr 11 (also die Kabelzufuhr 11i) hindurch bis zum Austritt aus dem nunmehr offenen, freien Ende des Sammelrohrs 11. Das Innere des Sammelrohres 11 bildet nun eine Kabelzufuhr 11i.

Das Sammelsieb 15 positioniert die Kabel C bei der Einführung in das Sammelrohr 11, so dass sie beim Austritt aus dem Sammelrohr 11 die gewünschte Anordnung zueinander aufweisen. Das Sammelsieb 15 ist bezüglich des Durchmessers (beispielsweise Twisted-Pair 5 bis 8 mm, Lichtwellenleiter dünner), des Querschnitts (beispielsweise rund oder dreieckig) und der Anzahl (beispielsweise 12, 16, 24) seiner Öffnung an das herzustellende, vom Schlauch H umschlossene Kabelbündel T angepasst. Sofern die Anzahl der Abroller 23 des Abrollerteils der Bündelungsvorrichtung 1 nicht für die gewünschte Anzahl von Kabeln C ausreichen, wird ein weiteres Abrollerteil verwendet.

Die freien Enden der zu bündelnden Kabel C werden ein Stück weiter aus der Kabelzufuhr 11i herausgezogen, so dass dieser herausragende Teil ("Peitsche") des Kabelbündels T (beispielsweise 0,5 m) frei vom Schlauch H bleibt. Zum Ende des dritten Vorbereitungsschritts wird das am freien Ende der Schlauchzufuhr 11a angeordnete Ende des Schlauchs H an dem aus der Kabelzufuhr 11i herausragenden Teil des Kabelbündels befestigt, beispielsweise mittels eines Klebeband provisiorisch angeklebt.

Im Verarbeitungsschritt bildet das freie Ende des Sammelrohrs 11 die Bündelungsstelle 11e. Die Kabel C werden aus der Kabelzufuhr 11i gezogen (in Zufuhrrichtung z) und dabei zugleich der Schlauch H von der Schlauchzufuhr 11a abgezogen (ebenfalls in Zufuhrrichtung z), beispielsweise manuell oder mittels eines Greifers oder mittels eines elektrisch angetriebenen Kabelaufrollers, so dass an der Bündelungsstelle 11e gemeinsam das vom Schlauch H umschlossene Kabelbündel T entsteht und in Verlängerung der Zufuhrrichtung z abgegeben wird. Die Führungsrollen 17 und das Sammelsieb 15 sorgen für eine gleichmäßige und reibungsarme Versorgung der Kabelzufuhr 11i mit weiterem Kabel. Die Zugkraft am Schlauch H (welche mittels der Befestigung am Kabelbündel T und den bereits das Kabelbündel T umschließenden Teil des Schlauchs H auf den Schlauch H am freien Ende der Schlauchzufuhr 11a übertragen wird) sorgt dafür, dass sich der Schlauch H eng an das Kabelbündel T anlegt. Gegebenenfalls ist auch eine Einrichtung vorgesehen, welche den Schlauch H mit der richtigen Spannung von der Schlauchzufuhr 11a abgibt, sofern diese Regelung nicht manuell erfolgt.

In einem späteren Verfahrensschritt können die Klebestellen an den Enden des Schlauchs H durch einen elastischen Gummischlauch oder einen Schrumpfschlauch (oder eine sonstige Manschette) gesichert oder ersetzt werden. Ferner können Stecker, beispielsweise RJ45, an den jeweiligen Enden der Kabel C angebracht werden, um ein Bündel konfektionierter Datenkabel ("Patch Cord" oder kurz "Cord") zu erhalten.

Vorliegend sind das Abrollerteil und das Aufzieherteil der Bündelungsvorrichtung 1 nicht miteinander verbunden. Dadurch kann wenigstens ein weiteres Abrollerteil zum Einsatz kommen, d.h. ein weiterer zweiter Montagerahmen 21 samt Aufbauten. Die Abrollerteile werden vorab mit den zu bündelnden Kabeln C bestückt, beispielsweise als Nachschub für den nächsten Bündelungsvorgang oder für eine andere Farbkodierung. Das Bestücken kann beispielsweise direkt nach der Ablängmaschine erfolgen. Das benutzte Abrollerteil kann dann nach dem Verarbeitungsschritt durch das vorbereitete, weitere Abrollerteil ersetzt werden und an das Aufzieherteil andocken, um ohne nennenswerten Zeitverlust weiter bündeln zu können, d.h. die Rüstzeiten der Bündelungsvorrichtung 1 werden verkürzt, insbesondere beim zweiten Vorbereitungsschritt. An das Andocken schließt sich wieder der dritter Vorbereitungsschritt an.

### Bezugszeichenliste

- 1: Bündelungsvorrichtung
- 3: erster Montagerahmen
- 5: Träger
- 7: Quertraverse
- 8: Rohrhalter
- 9: Sammelöffnung
- 11: Sammelrohr
- 11a: Schlauchzufuhr
- 11e: Bündelungsstelle
- 11i: Kabelzufuhr
- 13: Aufschiebhilfe
- 15: Sammelsieb
- 17: Führungsrolle
- 19: Führungsöffnung
- 21: zweiter Montagerahmen
- 23: Abroller
- 23a: Abrollöffnung
- C: Kabel
- H: Schlauch
- T: Kabelbündel, vom Schlauch umschlossen
- z: Zufuhrrichtung

## Patentansprüche

1. Bündelungsvorrichtung (1) für Kabel, mit
a) wenigstens einer Kabelzufuhr (11i), welche mehrere, zu bündelnde Kabel (C) in einer Zufuhrrichtung (z) zuführt,
b) einer Schlauchzufuhr (11a), welche einen Schlauch (H) zuführt,
c) einer Bündelungsstelle (11e), ab welcher der Schlauch (H) das Kabelbündel (T) umschließt,
d) einem hohlen Sammelrohr (11), dessen Inneres die Kabelzufuhr (11i) und dessen Außenseite die Schlauchzufuhr (11a) bildet, wobei ein freies Ende des Sammelrohres (11), welches in Zufuhrrichtung nach der Kabelzufuhr (11i) angeordnet ist, die Bündelungsstelle (11e) bildet, und wobei das Sammelrohr (11) auf der vom freien Ende abgewandten Seite ein festes Ende aufweist, welches an einem Rohrhalter (8) befestigt ist und welches in Zufuhrrichtung (z) vor der Kabelzufuhr (11i) angeordnet ist,
e) einer Sammelöffnung (9), welche im Rohrhalter (8) ausgebildet ist, mit welcher das Sammelrohr (11) fluchtet, welche in Zufuhrrichtung (z) vor der Kabelzufuhr (11i) angeordnet ist und durch welche die zu bündelnden Kabel (C) gemeinsam geführt sind, und
f) einem Abroller (23) für jedes zu bündelnde Kabel (C), welcher das Kabel (C) abgibt,
**gekennzeichnet durch**
g) ein Sammelsieb (15) mit mehreren Öffnungen, welches am Rohrhalter (8) befestigt ist, mit welchem das Sammelrohr (11) fluchtet, welches in Zufuhrrichtung (z) vor der Kabelzufuhr (11i) angeordnet ist und durch welches - als feine Führung - die zu bündelnden Kabel (C) durch jeweils genau eine Öffnung einzeln geführt sind, und
h) eine Führungsöffnung (19), welche zwischen den Abrollern (23) und dem festen Ende des Sammelrohrs (11) mit der Sammelöffnung (9) und dem Sammelsieb (15) in Zufuhrrichtung (z) vor der Kabelzufuhr (11i) vorgesehen ist und durch welche - als grobe Führung - jedes der zu bündelnden Kabel (C) geführt ist.

2. Bündelungsvorrichtung nach Anspruch 1, **gekennzeichnet durch** einen ersten Montagerahmen (3), von dem mehrere Träger (5) abstehen, wobei zwei Träger (5) zusammen mit einer Quertraverse (7) den Rohrhalter (8) bilden, und zwei weitere Träger (5) mehrere Führungsrollen (17), welche zwischen sich die Führungsöffnung (19) bilden, wobei der erste Montagerahmen (3) und seine Aufbauten ein Aufzieherteil der Bündelungsvorrichtung (1) bilden.

3. Bündelungsvorrichtung nach Anspruch 1 oder 2, **gekennzeichnet durch** einen zweiten Montagerahmen (21), von dem weitere Träger (5) abstehen, an denen die vorgesehenen Abroller (23) montiert sind, wobei der zweite Montagerahmen (21) und seine Aufbauten ein Abrollerteil der Bündelungsvorrichtung (1) bilden.

4. Bündelungsvorrichtung nach Anspruch 2 und 3, **dadurch gekennzeichnet, dass** die beiden Montagerahmen (3, 21) unabhängig voneinander bewegbar und für den Gebrauch der Bündelungsvorrichtung (1) in Anlage aneinander bringbar sind.

5. Bündelungsvorrichtung nach Anspruch 3 oder 4, **dadurch gekennzeichnet, dass** ein weiteres Abrollerteil vorgesehen ist.

6. Bündelungsvorrichtung nach einem der vorhergehenden Ansprüche, **dadurch gekennzeichnet, dass** die Bündelungsvorrichtung (1) eine Aufschiebhilfe (13) zum erleichterten Aufschieben des Schlauchs (H) auf die Schlauchzufuhr (11a) aufweist, wobei die Aufschiebhilfe (13) lösbar am Sammelrohr (11) anbringbar ist, insbesondere in das Sammelrohr (11) einsteckbar ist.

7. Bündelungsvorrichtung nach einem der vorhergehenden Ansprüche, **dadurch gekennzeichnet, dass** das Sammelrohr (11) und/oder das Sammelsieb (15) austauschbar am Rohrhalter (8) befestigt sind.

8. Verfahren zum Bündeln von Kabeln mittels einer Bündelungsvorrichtung nach einem der vorhergehenden Ansprüche, wobei in einem Verarbeitungsschritt die zu bündelnden Kabel (C) die zu bündelnden Kabel (C) von den Abrollern (23) der Bündelungsvorrichtung (1) abgerollt, durch die Führungsöffnung (19) und das Sammelsieb (15) und die Sammelöffnung (9) im Rohrhalter (8) der Kabelzufuhr (11i) zugeführt und mittels der Kabelzufuhr (11i) in der Zufuhrrichtung (z) der Bündelungsstelle (11e) zugeführt werden, während der Schlauch (H) mittels der Schlauchzufuhr (11a) der Bündelungsstelle (11e) zugeführt wird, und in Zufuhrrichtung (z) nach der Bündelungsstelle (11e) das vom Schlauch (H) umschlossene Kabelbündel (T) abgegeben wird.

9. Verfahren nach Anspruch 8, **dadurch gekennzeichnet**, das die Schlauchzufuhr (11a) den Schlauch (H) in der Zufuhrrichtung (z) der Bündelungsstelle (11e) zuführt.

10. Verfahren nach Anspruch 8 oder 9, **dadurch gekennzeichnet, dass** in einem Vorbereitungsschritt die Aufschiebhilfe (13) am freien Ende des Sammelrohres (11) angebracht wird, der Schlauch (H) auf die Schlauchzufuhr (11a) aufgeschoben wird, und die Aufschiebhilfe (13) wieder vom Sammelrohr (11) getrennt wird.

11. Verfahren nach einem der Ansprüche 8 bis 10, **dadurch gekennzeichnet, dass** nach dem Verarbeitungsschritt das benutzte Abrollerteil durch das vorbereitete, weitere Abrollerteil ersetzt wird und an das Aufzieherteil andockt.

12. Verfahren nach einem der Ansprüche 8 bis 11, **dadurch gekennzeichnet, dass** das Sammelrohr (11) gegen ein alternatives Sammelrohr mit anderem Durchmesser und/oder anderer Länge ausgetauscht wird, und/oder dass das Sammelsieb (15) gegen ein alternatives Sammelsieb mit Öffnungen von anderem Durchmesser und/oder anderem Querschnitt und/oder andererAnzahl ausgetauscht wird.

## Claims

1. Bundling device (1) for cables, with
a) at least one cable supply (11i) which supplies several cables to be bundled (C) in a supply direction (z),
b) a tube supply (11a) which supplies a tube (H),
c) a bundling location (11e), from which the tube (H) encloses the cable bundle (T),
d) a hollow manifold (11), the inside of which forms the cable supply (11i) and the outside of which forms the tube supply (11a), in which a free end of the manifold (11), which is arranged in supply direction downstream of the cable supply (11i), forms the bundling location (11e), and in which the manifold (11) on the side facing away from the free end presents a fixed end, which is fixed at a pipe support (8), and which is arranged in supply direction (z) upstream of the cable supply (11i),
e) a collecting opening (9) formed in the pipe support (8), with which the manifold (11) is aligned, which is arranged in supply direction (z) upstream of the cable supply (11i) and through which the cables to be bundled (C) are guided together, and
f) an unwinder (23) for each cable to be bundled (C), which releases the cable (C),
**characterized by**
g) a collecting sieve (15) with several openings, which is fixed at the pipe support (8), with which the manifold (11) is aligned, which is arranged in supply direction (z) upstream of the cable supply (11i) and through which - as a fine guide - the cables to be bundled (C) are individually guided precisely through a respective opening, and
h) a guide opening (19), which is provided between the unwinder (23) and the fixed end of the manifold (11) with the collecting opening (9) and the collecting sieve (15) in supply direction (z) upstream of the cable supply (11i), and through which - as a coarse guide - each of the cables to be bundled (C) is guided.

2. Bundling device according to claim 1, **characterized by** a first mounting frame (3), from which several carriers (5) protrude, wherein two carriers (5) together with an orthogonal crossbar (7) form the pipe support (8), and two more carriers (5) form several guide rolls (17), which between themselves form the guide opening (19), in which the first mounting frame (3) and its superstructures form a drawing part of the bundling device (1).

3. Bundling device according to claim 1 or 2, **characterized in that** a second mounting frame (21), from which further carriers (5) protrude, on which the unwinders (23) provided are mounted, in which the second mounting frame (21) and its superstructures form an unwinder part of the bundling device (1).

4. Bundling device according to claim 2 and 3, **characterised in that** both mounting frames (3, 21) are movable independently and for the use of the bundling device (1) can be made to abut each other.

5. Bundling device according to claim 3 or 4, **characterised in that** a further unwinder part is provided.

6. Bundling device according to any of the preceding claims, **characterised in that** the bundling device (1) has a pushing aid (13) for facilitated pushing of the tube (H) onto the tube supply (11a), wherein the pushing aid (13) can be fastened detachably at the manifold (11), in particular inserted into the manifold (11).

7. Bundling device according to any of the preceding claims, **characterised in that** the manifold (11) and/or the collecting sieve (15) are interchangeably fixed at the pipe support (8).

8. Process for making up bundles of cables by means of a bundling device according to any of the preceding claims, wherein in a processing phase the cables to be bundled (C) are unwound by the unwinders (23) of the bundling device (1), supplied to the cable supply through the guide opening (19) and the collecting sieve (15) and the collecting opening (9) in the pipe support (8) of the cable supply (11i) and by means of the cable supply (11i) in supply direction (z) are supplied to the bundling location (11e), while the tube (H) by means of the tube supply (11a) is conducted to the bundling location (11e), and in supply direction (z) downstream of the bundling location (11e) the bundle of cables (T) surrounded by the tube (H) is given off.

9. Process according to claim 8, **characterised in that** the tube supply (11a) supplies the tube (H) in supply direction (z) to the bundling location (11e).

10. Process according to claim 8 or 9, **characterised in that** in a preparation phase the pushing aid (13) is applied at the free end of the manifold (11), the tube (H) is pushed on the tube supply (11a), and the pushing aid (13) is separated again from the manifold (11).

11. Process according to one of claims 8 to 10, **characterised in that** after the processing phase the used unwinder part is replaced by the prepared further unwinder part and connects to the drawing part.

12. Process according to one of claims 8 to 11, **characterised in that** the manifold (11) is exchanged with an alternative manifold with different diameter and/or different length, and/or that the collecting sieve (15) is exchanged with an alternative collecting sieve with openings with different diameters and/or different cross-section and/or different number.

## Revendications

1. Dispositif de mise en faisceau (1) pour des câbles, avec
a) au moins un apport de câbles (11i), lequel convoie plusieurs câbles à mettre en faisceau (C) dans une direction d'apport (z),
b) un apport de tube (11a), lequel convoie un tube (H),
c) une place de mise en faisceau (11e), d'où le tube (H) entoure le faisceau de câbles (T),
d) un tuyau collecteur creux (11), dont l'intérieur forme l'apport de câbles (11i) et dont l'extérieur forme l'apport de tube (11a), où une extrémité libre du tuyau collecteur (11), laquelle est arrangée en direction d'apport en aval de l'apport de câbles (11i), forme la place de mise en faisceau (11e), et où le tuyau collecteur (11) sur le côté détourné de l'extrémité libre a une extrémité fixe, laquelle est attachée à un support de tuyau (8) et laquelle est arrangée en direction d'apport (z) en amont de l'apport de câbles (11 i),
e) une ouverture de collecte (9) formée dans le support de tuyau (8), à laquelle le tuyau collecteur (11) est aligné, laquelle est arrangée en direction d'apport (z) en amont de l'apport de câbles (11i) et à travers laquelle les câbles à mettre en faisceau (C) sont guidés ensemble, et
f) un dérouleur (23) pour chaque câble à mettre en faisceau (C), lequel relâche le câble (C),
**caractérisé par**
g) un tamis collecteur (15) avec plusieurs ouvertures, lequel est attaché au support de tuyau (8), auquel le tuyau collecteur (11) est aligné, lequel est arrangé en direction d'apport (z) en amont de l'apport de câbles (11i) et à travers lequel - comme guidage fin - les câbles à mettre en faisceau (C) sont guidés de manière individuelle à travers précisément une ouverture respective, et
h) une ouverture de guidage (19), laquelle est prévue entre le dérouleur (23) et l'extrémité fixe du tuyau collecteur (11) avec l'ouverture de collecte (9) et le tamis collecteur (15) en direction d'apport (z) en amont de l'apport de câbles (11i), et à travers laquelle - comme guidage grossier - chacun des câbles à mettre en faisceau (C) est guidé.

2. Dispositif de mise en faisceau selon la revendication 1, **caractérisé par** un premier cadre de montage (3), duquel plusieurs éléments porteurs (5) saillent, où deux éléments porteurs (5) avec une traverse orthogonale (7) forment le support de tuyau (8), et deux éléments porteurs additionnels (5) forment plusieurs rouleaux de guidage (17), lesquels forment entre eux l'ouverture de guidage (19), où le premier cadre de montage (3) et ses superstructures forment une partie d'étirage du dispositif de mise en faisceau (1).

3. Dispositif de mise en faisceau selon la revendication 1 ou 2, **caractérisé par** un second cadre de montage (21), duquel des éléments porteurs additionnels (5) saillent, sur lesquels les dérouleurs (23) prévus sont montés, où le deuxième cadre de montage (21) et ses superstructures forment une partie de déroulement du dispositif de mise en faisceau (1).

4. Dispositif de mise en faisceau selon la revendication 2 et 3, **caractérisé en ce que** les deux cadres de montage (3, 21) sont mobiles de façon indépendante l'un de l'autre et pour l'usage du dispositif de mise en faisceau (1) peuvent être rendus contigus l'un à l'autre.

5. Dispositif de mise en faisceau selon la revendication 3 ou 4, **caractérisé en ce qu'**une partie de déroulement additionnelle est prévue.

6. Dispositif de mise en faisceau selon l'une quelconque des revendications précédentes, **caractérisé en ce que** le dispositif de mise en faisceau (1) a une aide de poussée (13) pour la poussée facilitée du tube (H) sur l'apport de tube (11a), où l'aide de poussée (13) peut être attachée au tuyau collecteur (11) de façon amovible, en particulier insérée dans le tuyau collecteur (11).

7. Dispositif de mise en faisceau selon l'une quelconque des revendications précédentes, **caractérisé en ce que** le tuyau collecteur (11) et/ou le tamis collecteur (15) sont attachés de façon interchangeable au support de tuyau (8).

8. Procédé pour faire des faisceaux de câbles au moyen d'un dispositif de mise en faisceau selon l'une quelconque des revendications précédentes, où dans une phase de traitement les câbles à mettre en faisceau (C) sont déroulés par les dérouleurs (23) du dispositif de mise en faisceau (1), convoyés à l'apport de câbles à travers l'ouverture de guidage (19) et le tamis collecteur (15) et l'ouverture de collecte (9) dans le support de tuyau (8) de l'apport de câbles (11i) et au moyen de l'apport de câbles (11i) en direction d'apport (z) sont convoyés à la place de mise en faisceau (11e), pendant que le tube (H) au moyen de l'apport de tube (11a) est convoyé à la place de mise en faisceau (11e), et en direction d'apport (z) en aval de la place de mise en faisceau (11e) le faisceau de câbles (T) entouré par le tuyau (H) est délivré.

9. Procédé selon la revendication 8, **caractérisé en ce que** l'apport de tube (11a) convoie le tube (H) en direction d'apport (z) à la place de mise en faisceau (11e).

10. Procédé selon la revendication 8 ou 9, **caractérisé en ce que** dans une phase de préparation l'aide de poussée (13) est appliquée à l'extrémité libre du tuyau collecteur (11), le tube (H) est poussé sur l'apport de tube (11a), et l'aide de poussée (13) est de nouveau séparée du tuyau collecteur (11).

11. Procédé selon l'une des revendications 8 à 10, **caractérisé en ce qu'**après la phase de traitement la partie de déroulement employée est remplacée par la partie de déroulement additionnelle préparée et se connecte à la partie d'étirage.

12. Procédé selon l'une des revendications 8 à 11, **caractérisé en ce que** le tuyau collecteur (11) est remplacé par un tuyau collecteur alternatif avec un diamètre différent et/ou une longueur différente, et/ou que le tamis collecteur (15) est remplacé par un tamis collecteur alternatif avec des ouvertures avec des diamètres différents et/ou des section transversale différentes et/ou un nombre différent.
